# EUROPEAN PATENT APPLICATION

(11) **EP 2 228 863 A1**
(43) Date of publication of application: **15.09.2010**
(21) Application number: 08861966.3
(22) Date of filing: 08.12.2008
(51) Int. Cl.: H01M 10/40, H01M 2/16, H01M 4/02, H01M 4/66

(54) **NONAQUEOUS ELECTROLYTE SECONDARY BATTERY**

(30) Priority: 17.12.2007 JP 2007325039
(71) Applicant: Panasonic Corporation, Kadoma-shi Osaka 571-8501 (JP)
(72) Inventor: NAKURA, Kensuke, 7F OBP Panasonic Tower, 1-61, Shiromi 2-chome, Chuo-ku, Osaka-shi Osaka 540-6207 (JP)
(74) Representative: Schwabe - Sandmair - Marx
(86) International application number: PCT/JP2008/003644
(87) International publication number: WO 2009/078138

(57) **Abstract**

An object of the invention is to provide a nonaqueous electrolyte secondary battery exhibiting high output characteristics in low-temperature environments, the nonaqueous electrolyte secondary battery being a lithium ion battery which uses a lithium manganese composite oxide as a positive electrode active material and a lithium titanium composite oxide as a negative electrode active material. The nonaqueous electrolyte secondary battery wherein the positive electrode active material contains a lithium-manganese composite oxide containing lithium and manganese as constituent elements, the negative electrode active material contains a lithium-titanium composite oxide containing lithium and titanium as constituent elements, and the separator contains inorganic particles is used.

## Description

### Technical Field

The present invention relates to a nonaqueous electrolyte secondary battery, and particularly to a nonaqueous electrolyte secondary battery exhibiting high output property in low-temperature environments.

### Background Art

Lead storage batteries are widely used as back-up power sources for industrial and business machines, and as starter power sources in automobiles.

In recent years, there has been increasing development aimed at replacing the lead storage batteries used as back-up power sources with nickel-hydrogen batteries and lithium-ion secondary batteries. By replacing lead batteries with nickel-hydrogen batteries and lithium-ion secondary batteries, it should be possible to reduce battery sizes by achieving higher energy densities, and to reduce the environmental burden by eliminating the need for lead.

At present, there is not a strong movement towards replacing the lead storage batteries used as starter power sources in automobiles with nickel-hydrogen batteries or lithium-ion secondary batteries. From the standpoint of reducing the environmental burden, however, environmentally-friendly lead-free batteries would also be desirable as starter power sources in automobiles. Because of their lighter weight, lithium-ion secondary batteries are more promising than nickel-hydrogen batteries for use as starter power sources in automobiles.

LiCoO₂ is known as a positive electrode active material that works in 4 V-class lithium-ion secondary batteries for use as automobile starter power sources. However, the high cost of cobalt makes it unsuited for use in mass production of large secondary batteries such as automobile batteries.

Moreover, since the operating voltage of a common, conventional lithium-ion battery using LiCoO₂ as the positive electrode active material and graphite as the negative electrode active material is 3.7 V, 11.1 V is obtained with a series battery using three of this battery and 14.8 V using four of this battery. Thus, because the operating voltage range of a lead storage battery is 12 V, it has not been possible to match an assembled battery consisting of the common LiCoO₂-graphite lithium-ion batteries to the operating voltage range of the lead storage battery.

This has led to the development of a lithium-ion secondary battery in which a lithium-manganese composite oxide containing inexpensive manganese in place of cobalt as a constituent element is used as the positive electrode active material, and a lithium-titanium composite oxide with a high reduction potential is used as the negative electrode active material so that the assembled battery will be compatible with the operating range of a lead storage battery. Because the operating voltage of a lithium-ion secondary battery using LiCoO₂ as the positive electrode active material and a lithium-titanium composite oxide such as Li₄Ti₅O₁₂ for example as the negative electrode active material is 2.5 V, an operating voltage of 12.5 V is obtained with a series of 5 such batteries, making it compatible with the operating voltage range of a lead storage battery.

As an example of such a lithium-ion secondary battery, Non-patent Document 1 discloses a lithium-ion secondary battery using a lithium-manganese composite oxide with a spinel structure (Li_{1.1}Al_{0.1}Mn_{1.8}O₄) as the positive electrode active material and a lithium-titanium composite oxide with a spinel structure (Li_{4/3}Ti_{5/3}O₄) as the negative electrode active material.

Patent Document 1 for example also discloses a positive electrode active material consisting of the lithium-manganese composite oxide represented by Li₁₊ₓMyMn_{2-x-y}O_{4-z} (in which M is at least one selected from titanium, vanadium, chromium, iron, cobalt, nickel, zinc, copper, tungsten, magnesium and aluminum; 0 ≤ x ≤ 0.2, 0 ≤ y < 0.5 and 0 ≤ z < 0.2), the half band width of the (400) diffraction peak of the composite oxide according to powder x-ray diffraction using CuKα radiation being at least 0.02 θ but no more than 0.1 θ (θ being the diffraction angle), and the primary particles of the composite oxide being octahedral in shape. It also proposes a battery having a positive electrode containing such a positive electrode active material and a negative electrode containing the lithium-titanium composite oxide represented by LiₐTi_{b}O₄ (0.5 ≤ a ≤ 3,1 ≤ b ≤ 2.5) as the negative electrode active material.

When the lead storage batteries used in the fields of automobile starter power sources and back-up power sources are replaced with lithium-ion secondary batteries and other nonaqueous electrolyte secondary batteries, high output characteristics are required. Automobile starter power sources in particular need to have high output characteristics in low temperature environments because they are used also in cold regions.

The lithium-ion secondary batteries disclosed in Non-patent Document 1 and in Patent Document 1, in which the lithium-manganese composite oxide is used as the positive electrode active material and the lithium-titanium composite oxide is used as the negative electrode active material, have had a problem that the output characteristics are low in low temperature environments.
Non-patent Document 1: T. Ohzuku et al., Chemistry Letters, 35, 848-849 (2006)
Patent Document 1: Japanese Patent Application Laid-open No. 2001-210324

### Disclosure of the Invention

It is an object of the present invention to provide a nonaqueous electrolyte secondary battery exhibiting high output characteristics in low-temperature environments, which is a lithium-ion secondary battery using a lithium-manganese composite oxide as the positive electrode active material and a lithium-titanium composite oxide as the negative electrode active material.

One aspect of the present invention is a nonaqueous electrolyte secondary battery provided with a nonaqueous electrolyte and an electrode assembly comprising a positive electrode having a positive electrode active material, a negative electrode having a negative electrode active material, and a separator interposed between the positive and negative electrodes, wherein the positive electrode active material contains a lithium-manganese composite oxide containing lithium and manganese as constituent elements, the negative electrode active material contains a lithium-titanium composite oxide containing lithium and titanium as constituent elements, and the separator contains inorganic particles.

Objects, features, aspects and advantages of the present invention will become more apparent by the following detailed description along with the accompanying drawing.

### Brief Description of the Drawings

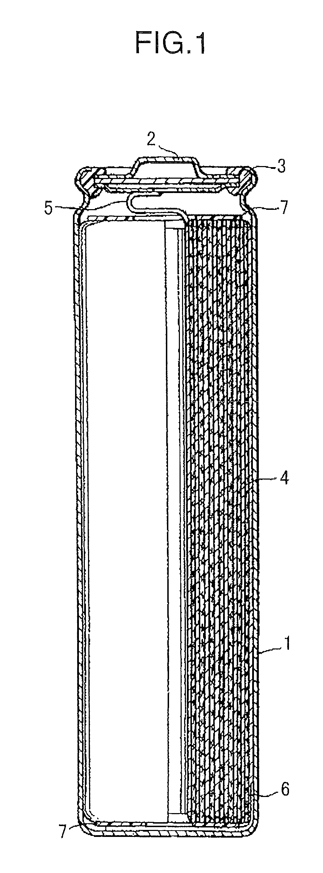

[Fig. 1] Fig. 1 is a partial cross-sectional view of a cylindrical battery corresponding to one embodiment of the nonaqueous electrolyte secondary battery according to the present embodiment.

### Best Mode for Carrying Out the Invention

Preferred embodiments of the present invention are given below, but the present invention is not in any way limited by these embodiments.

As a result of exhaustive investigations studying the reasons why a nonaqueous electrolyte secondary battery using a lithium-manganese composite oxide as the positive electrode active material and a lithium-titanium composite oxide as the negative electrode active material exhibits poor output characteristics in low temperature environments, the inventors arrived at the present invention after finding that the charge transfer resistance of the positive electrode or negative electrode could be lowered by including inorganic particles in the separator, thereby enabling to improve the output characteristics in low-temperature environments.

The nonaqueous electrolyte secondary battery in the embodiment of the present invention is a nonaqueous electrolyte secondary battery provided with a nonaqueous electrolyte and an electrode assembly comprising a positive electrode having a positive electrode active material, a negative electrode having a negative electrode active material and a separator interposed between the positive and negative electrodes, in which the positive electrode active material contains a lithium-manganese composite oxide containing lithium and manganese as constituent elements, the negative electrode active material contains a lithium-titanium composite oxide containing lithium and titanium as constituent elements, and the separator contains inorganic particles.

First, the positive electrode is explained.

The positive electrode has a structure that a positive electrode mixture layer containing the positive electrode active material is formed on the surface of a positive electrode current collector. The positive electrode active material contains a lithium-manganese composite oxide containing lithium and manganese as constituent elements. Such a positive electrode can be obtained by a method in which a positive electrode mixture paste containing the positive electrode mixture dispersed in a liquid medium is coated on the positive electrode current collector, dried, and then rolled, or a method in which the positive electrode mixture is subjected to pressure bonding and then rolled, or the like. The positive electrode mixture contains the positive electrode active material, a conductive agent and a binder.

The lithium-manganese composite oxide that is used as the positive electrode active material is not particularly limited as long as it is a composite oxide containing lithium and manganese as constituent elements. Specific examples include composite oxides such as those represented by General Formulae (1) and (2) below.

A composite oxide represented by:

Ii_{1±α}[Me]O₂ (1)

(in General Formula (1), 0 ≤ α < 0.2, and Me is a transition metal including manganese and at least one selected from the group consisting of iron, cobalt, nickel, titanium and copper), and having a layered structure.

A composite oxide represented by:

Li_{1±α}[Me]₂O₄ (2)

(in General Formula (2), 0 ≤ α < 0.5, and Me is a transition metal including manganese and at least one selected from the group consisting of iron, cobalt, nickel, titanium and copper), and having a spinel structure.

In General Formulae (1) and (2) above, α is a factor that can be adjusted in order to control particle growth. That is, when the value of "1 ± α" is small, particle growth is suppressed during synthesis, and the surface area tends to be large relative to the total amount of all particles. When the value of "1 ± α" is large, on the other hand, particle growth is promoted during synthesis, and the surface area tends to be small relative to the total amount of all particles.

The particle diameter can be controlled by adjusting the composite ratio of lithium in this way.

Among the positive electrode active material, it is particularly desirable to contain at least one selected from the group consisting of Li_{1±x}Ni_{1/2}Mn_{1/2}O₂ (x ≤ 0.1), Li_{1±x}Ni_{1/3}Co_{1/3}Mn_{1/3}O₂(x ≤ 0.1), Li_{1±x}Mn₂O₄ (x ≤ 0.1), Li_{1,1±x}Al_{0.1}Mn_{1.8}O₄ (x ≤ 0.1), and Li_{1±x}Ni_{2/3}Mn_{4/2}O₄ (x ≤ 0.1).

From the standpoint of greater safety, it is particularly desirable to use the positive electrode active material in which a part of [Me] in General Formula (1) or (2) above is substituted with at least one element selected from the group consisting of aluminum, magnesium, strontium, calcium, ytterbium, cerium and ytterbium.

Specific examples of methods for manufacturing the lithium-manganese composite oxide represented by General Formula (1) or (2) are given below.

For example, oxides, hydroxides and/or carbonates or the like containing the elements for constituting the positive electrode active material of the target composition can be mixed in specific proportions and then baked. With this method, however, each oxide, hydroxide and/or carbonate or the like must have a uniform particle size, and must be thoroughly mixed in order to achieve a uniform reaction.

In a different manufacturing method, a solution of lithium hydroxide or the like is dripped into an aqueous solution of a nickel compound such as NiSO_{4·}6H₂O, a cobalt compound such as CoSO₄·7H₂O, a manganese compound such as MnSO₄·5H₂O and other transition metal compounds and the like mixed so as to obtain an element composition for constituting the positive electrode active material of the desired composition. After a co-precipitate is deposited as a hydroxide or a carbonate, the co-precipitate is filtered, dried, pulverized and graded to obtain the composite oxide. The preparation is relatively easy by this method because the nickel or manganese, which is difficult to disperse uniformly, can be dispersed uniformly within the particles in advance. In the Examples described below, a lithium-manganese composite oxide co-precipitated as a hydroxide was used. Lithium hydroxide was used as the lithium source. During baking, the reaction can also be promoted by molding into pellets.

The positive electrode mixture layer for the positive electrode preferably contains a conductive material for increasing the electrical conductivity of the positive electrode.

An electron conductive material that is resistant to chemical change during charge and discharge of a nonaqueous electrolyte secondary battery produced by using the conductive material can be used as the conductive material, without any particular limitations. Specific examples of such conductive materials include natural graphite (scaly graphite or the like), artificial graphite and other graphites; acetylene black, Ketjen black, channel black, furnace black, lamp black, thermal black and other carbon blacks; carbon fiber, metal fiber and other conductive fibers; carbon fluoride; copper, nickel, aluminum, silver and other metal powders; potassium titanate and other conductive whiskers; zinc oxide, titanium oxide and other conductive metal oxides; and polyphenylene derivatives and other organic conductive materials and the like. Any of these can be used alone, or two or more can be used in combination. Of these, artificial graphite, acetylene black and nickel powder are particular desirable.

The compounding proportion of the conductive material is not particularly limited, but it is preferably 1 to 50 mass% or more preferably 1 to 30 mass% of the positive electrode mixture layer. 2 to 15 mass% is particularly desirable when graphite or carbon black is used.

A binder is also included in the positive electrode mixture layer. The binder is preferably one that is resistant to chemical change during charge and discharge when used in a nonaqueous electrolyte secondary battery. Consequently, a polymer with a decomposition-starting temperature of 200°C or more is preferred. Specific examples of such binders include polyethylene (PE), polypropylene (PP), polytetrafluoroethylene (PTFE), polyvinylidene fluoride (PVDF), tetrafluoroethylene-hexafluoroethylene copolymer, tetrafluoroethylene-hexafluoropropylene copolymer (FEP), tetrafluoroethylene-perfluoroalkylvinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethylvinyl ether-tetrafluoroethylene copolymer and the like. Any of these can be used alone, or two or more can be used in combination. Of these, polyvinylidene fluoride (PVDF) and polytetrafluoroethylene (PTFE) are preferred.

Any electron conductor that is resistant to chemical change during charge and discharge when used in a nonaqueous electrolyte secondary battery can be used for the positive electrode current collector, without any particular limitations. Specific examples of materials for the positive electrode current collector include stainless steel, nickel, aluminum, titanium, various alloys, carbon and the like, as well as composite materials that aluminum or stainless steel has been surface-treated with carbon, nickel, titanium, silver or the like. The surfaces of these materials may have been subjected to an oxidation treatment or a treatment to give an irregular surface. In the present embodiment, as explained below, it is especially desirable to use aluminum or an aluminum alloy and other aluminum-based metal for the positive electrode current collector and a negative electrode current collector.

The form of the positive electrode current collector is not particularly limited as long as it is a form that is conventionally used in nonaqueous electrolyte secondary batteries. Specific examples of such forms include foils, films, sheets, nets, punched forms, lath materials, porous materials, foams, fiber groups, nonwoven fabrics and the like. The thickness of the positive electrode current collector is not particularly limited but is preferably 1 to 500 µm for example.

Next, the negative electrode is explained.

For the negative electrode, a negative electrode mixture layer containing the negative electrode active material is formed on the surface of a negative electrode current collector. The negative electrode active material contains a lithium-titanium composite oxide containing lithium and titanium as constituent elements. Such a negative electrode can be obtained by a method in which the negative electrode active material, a binder and a conductive material as necessary are dissolved or dispersed in a liquid medium to obtain a slurry, which is then kneaded to obtain a paste for the negative electrode mixture layer that is coated on the surface of the negative electrode current collector, dried, and rolled, or a method in which the negative electrode mixture is press-bonded and then rolled.

The lithium-titanium composite oxide used as the negative electrode active material is not particularly limited as long as it is a composite oxide containing lithium and titanium as constituent elements, but a lithium-titanium composite oxide having a spinel structure is particularly desirable.

Specific examples of lithium-titanium composite oxides include Li₄Ti₅O₁₂, LiₓTiO₂ (0 < x ≤ 0.8) and the like. Of these, Li₄Ti₅O₁₂ is especially desirable.

Li₄Ti₅O₁₂ is a negative electrode active material used in commercial lithium-ion secondary batteries, and high-quality Li₄Ti₅O₁₂ is available as a commercial product. It can also be synthesized by mixing lithium carbonate, lithium hydroxide or another lithium compound with titanium oxide as the titanium source to obtain the target composition, and then baking at a temperature of about 800°C to 1100°C in air or an oxygen stream or other oxidation atmosphere.

A conductive material can be compounded as necessary in the negative electrode mixture layer in order to improve the conductivity of the negative electrode. Conductive materials similar to those used in the positive electrode can be used. The compounded proportion of the conductive material is not particularly limited but is normally 0 to 10 mass% or preferably 0 to 5 mass% of the negative electrode mixture layer.

The negative electrode mixture layer also contains a binder. In addition to the binders compounded in the positive electrode mixture layer, styrene-butadiene rubber (SBR) and other rubber binders also can be preferably used.

An electron conductive material that is resistant to chemical change during charge and discharge when used in a nonaqueous electrolyte secondary battery can be used for the negative electrode current collector, without any particular limitations. Specific examples of materials for the negative electrode current collector include aluminum, aluminum-based metals such as Al-Cd alloys and other aluminum alloys, stainless steel, nickel, copper, titanium and carbon as well as copper or stainless steel that has been surface-treated with carbon, nickel, titanium or silver or the like. The surfaces of these materials may also be oxidative-treated or treated to give an irregular surface.

The form of the negative electrode current collector is not particularly limited as long as it is one that is conventionally used in the negative electrodes of nonaqueous electrolyte secondary batteries. Specific examples include foils, films, sheets, nets, punched forms, rath materials, porous materials, foams, fiber groups, nonwoven fabrics and the like. The thickness of the negative electrode is not particularly limited but is preferably 1 to 500 µm for example.

In the nonaqueous electrolyte secondary battery of the present embodiment, it is desirable that both the positive electrode current collector and negative electrode current collector comprises the aluminum-based metal. Using the aluminum-based metal also allows the weight and cost of the battery to be reduced compared to a case using copper and the like, which are commonly used as negative electrode current collector materials in lithium-ion secondary battery.

In a lithium-ion secondary battery using graphite as the negative electrode active material, which has a low potential of 0.2 V or less with respect to the lithium metal, it has not been possible to use the aluminum-based metal for a current collector. This is because the aluminum-based metal initiates a reaction with the lithium ions at a potential higher than the charge-discharge potential of the graphite in the negative electrode. In contrast, in a nonaqueous electrolyte secondary battery using a lithium-titanium composite oxide as the negative electrode active material, because the charge-discharge potential of the negative electrode is as high as 1.55 V, it is possible to use the aluminum-based metal for the current collector, which reacts at a potential lower than this potential.

When copper is used for the negative electrode current collector, moreover, the phenomenon of copper ion elution into the nonaqueous electrolyte occurs when the potential of the negative electrode rises due to deep discharge. When this occurs, copper is precipitated on the negative electrode surface prior to the insertion reaction of the lithium during recharging, thus inhibiting the lithium insertion reaction. In this case, lithium is precipitated on the negative electrode surface in the form of needle-shaped crystals. This reduces the safety of the battery, and can be a cause of reduced cycle life. When aluminum is used for the negative electrode current collector, on the other hand, the elution or re-precipitation of the metal ions does not occur.

Further, there is the risk that if a battery charger breaks down when a negative electrode-limited battery is connected to the charger, excess lithium will be supplied to the negative electrode due to overcharging of the battery. In this case, when copper is used for the negative electrode current collector, excess lithium metal is precipitated in the form of needle-shaped crystals on the negative electrode surface. These needle-shaped crystals of lithium metal reduce the safety of the battery against overcharge. When the aluminum-based metal is used for the negative electrode current collector, on the other hand, because aluminum has a strong ability to absorb and store lithium, the lithium metal is not precipitated on the negative electrode surface but absorbed and stored on the current collector during overcharge. Consequently, using the aluminum-based metal for the negative electrode current collector can provide the current collector with a safety function against battery overcharge.

The positive electrode and negative electrode were described above, but the positive and negative electrodes are not limited to these configurations. For example, an underlayer could be interposed between the current collector and the mixture layer with the aim of improving adhesiveness between the current collector and the mixture layer, conductivity, cycle characteristics and charging/discharging efficiency, or a protective layer could be formed on the surface of the mixture layer to mechanically or chemically protect the mixture layer. The underlayer and mixture layer can contain, for example, binders, conductive particles, nonconductive inorganic particles and the like.

Next, the separator is explained.

The separator which is a porous thin film, a woven fabric or a nonwoven fabric or the like can be used without any particular limitations, as long as it has sufficient ion permeability, mechanical strength and insulating properties for use as a separator in a nonaqueous electrolyte secondary battery and it contains inorganic particles.

The separator may be a single layer of a single material, or may be a laminate of multiple layers such as a porous resin layer for providing a shut-down function. "Shut-down function" means the function of controlling Joule heat generation and the like by blocking through-holes in the porous resin thin film by thermal fusion to thereby prevent ion conduction when the battery becomes hot during charge and discharge.

One example of a method for manufacturing such a separator containing the inorganic particles is explained below.

First, a resin for forming the separator is dissolved in an organic solvent to prepare a resin solution. A water-soluble powder such as lithium chloride powder is dissolved with agitation in the resulting resin solution, and the inorganic particles are added with agitation to obtain a dispersion liquid of the inorganic particles. The resulting dispersion liquid of inorganic particles is applied to a substrate so as to have a specific thickness, and dried to form a thin film. The resulting thin film is dipped in a warm bath to dissolve and remove lithium chloride and other water-soluble material in the thin film and thereby to form fine pores, and then washed in water to form a porous thin film containing the inorganic particles.

Specific examples of resins for forming the separator include polypropylene, polyethylene and other polyolefin resins, and polyimide, polyamidimide, aramide, and polyphenylene sulfide, or polyetherimide, polyethylene terephthalate, polyether nitrile, polyether etherketone, polybenzimidazole and other heat-resistant resins with a deflection temperature under load of 200°C or more. The aforementioned polyolefin resins are desirable since they have excellent durability and provide the shut-down function. The aforementioned heat-resistant resins are preferable from the standpoint of safety against internal short-circuit. The deflection temperature under load is the temperature as measured at 1.82 MPa by ASTM-D648.

The thickness of the separator formed in this way is 10 to 300 µm or preferably 10 to 40 µm or more preferably 10 to 30 µm or especially 15 to 25 µm.

The following method is an example of a different manufacturing method. A paste containing specific amounts of a binder, the inorganic particles and an organic solvent is coated on the surface of a positive electrode plate or negative electrode plate, and the solvent is removed by drying to form fine pores. In this method, a porous thin film containing the inorganic particles, which is adhesively laminated on the surface of the positive electrode or negative electrode, is formed. The separator obtained by such a manufacturing method is desirable from the standpoint of excellent shape stability. The binder is a component that allows the inorganic particles to bind one another and ensures the flexibility of the separator.

In this method, the percentage content of the binder in the separator is preferably about 1 to 50 mass%. If the binder content is too high, the pores composed of gaps between the inorganic particles decrease in amount, and if the binder content is too low, the inorganic particles may even fall out because of insufficient adhesive force binding them together.

Examples of the binder include commonly used polyethylene (PE), polypropylene (PP), polytetrafluoroethylene (PTFE), polyvinylidene fluoride (PVDF), styrene-butadiene rubber (SBR), and rubber polymers containing polyacrylonitrile units and the like. Considering the safety of the nonaqueous electrolyte secondary battery in particular, a rubber polymer containing polyacrylonitrile units, which has a decomposition-starting temperature of 200°C or more and has rubber elasticity to maintain the flexibility of the electrode plate, can be used by preference.

The thickness of the separator formed in this way is preferably 1 to 35 µm or more preferably 3 to 25 µm.

In an another manufacturing method, a paste containing specific quantities of a binder, the inorganic particles and an organic solvent is coated on the surface of a woven fabric or a nonwoven fabric, and the solvent is removed by drying to form fine pores, thus providing a porous thin film containing the inorganic particles.

As the nonwoven fabric, the fabric having an average pore diameter of 0.1 µm or more, in which the diameter of the fibers making up the nonwoven cloth is about 1 to 3 µm, is preferable from the standpoint of the battery characteristics. The fabric or the like in which the fibers are partially fused together by heated calender roll treatment is desirable since it is effective in providing thinness and increased strength.

In an another manufacturing method, a resin already made to contain the inorganic particles is melt blown to obtain a nonwoven fabric formed from fibers containing the inorganic particles.

In an another manufacturing method, a suitable quantity of the inorganic particles is scattered on the surface of a porous thin film, a woven fabric or a nonwoven fabric each having previously-formed fine pores, and this is pressed at a temperature sufficient to soften the constituent resin so that the inorganic particles are press bonded. After press bonding the inorganic particles, in order to remove unbonded inorganic particles, a flow of air is blown over the separator, or the separator is immersed in a liquid for ultrasonic cleaning. Thus, the separator containing the inorganic particles is formed.

As the inorganic particles, a material that has the effect of adsorbing manganese ions and that is resistant to chemical change during charge and discharge when used in a nonaqueous electrolyte secondary battery can be used, without any particular limitations. Desirable examples include alumina, magnesia, titania, zirconia, silica and other inorganic oxide particles, and glass powder, mica whiskers, ceramic fine powder and the like. Of these, alumina, magnesia, titania, zirconia, silica and other inorganic oxide particles are preferred, and alumina, magnesia and silica are especially preferred because of their strong ability to adsorb manganese ions. One kind of the inorganic particles can be used, or two or more kinds can be used in combination.

Regarding the average particle size of the inorganic particles, the median diameter is preferably 0.1 to 5 µm or more preferably 0.2 to 1.5 µm from the standpoint of shape stability and ionic conductivity of the separator. If the median diameter is too large, ionic conductivity will tend to decline, while if it is too small, adhesiveness between the inorganic particles will decline, and it may be hard to obtain sufficient shape stability. For purposes of forming a dense porous thin film, it is desirable to use a mixture of the inorganic particles of the same kind but with different median diameters.

The percentage content of the organic particles in the separator should be 0.1 to 99 mass% or preferably 25 to 75 mass% for purposes of achieving a satisfactory effect of adsorbing manganese ions.

The porosity of the separator is preferably in the range of 30 to 70% or more preferably 35 to 60% from the standpoint of ensuring adequate ionic conductivity. Here, the porosity is the volume ratio of pores relative to the separator volume.

Next, the nonaqueous electrolyte is explained.

A nonaqueous electrolytic solution or a solid electrolyte that is widely used as a nonaqueous electrolyte in conventional lithium-ion secondary batteries can be used as the nonaqueous electrolyte. In particular, in the nonaqueous electrolyte secondary battery of the present embodiment, since the lithium-manganese composite oxide is used as the positive electrode active material and the lithium-titanium composite oxide is used as the negative electrode active material, a broader selection of the nonaqueous electrolytes is possible as discussed below.

The nonaqueous electrolytic solution is composed of an organic solvent and a lithium salt or other solute dissolved in the organic solvent.

As the organic solvent for use in the nonaqueous electrolytic solution, a nonaqueous solvent conventionally used for lithium-ion secondary batteries can be used, without any particular limitations. Specific examples of the organic solvents include ethylene carbonate (EC), propylene carbonate (PC), butylene carbonate (BC), vinylene carbonate (VC) and other cyclic carbonates; γ-butyrolactone (GBL) and other cyclic carboxylic acid esters; dimethyl carbonate (DMC), diethyl carbonate (DEC), ethylmethyl carbonate (EMC), dipropyl carbonate (DPC) and other acyclic carbonates; methyl formate (MF), methyl acetate (MA), methyl propionate (MP), ethyl propionate (MA) and other aliphatic carboxylic acid esters; mixed solvents containing cyclic carbonates and acyclic carbonates; mixed solvents containing cyclic carboxylic acid esters; and mixed solvents containing cyclic carboxylic acid esters and cyclic carbonates and the like. The aliphatic carboxylic acid ester is preferably included in the range of 30% or less or more preferably 20% or less of the total solvent weight.

In the nonaqueous electrolyte secondary battery of the present embodiment, an organic solvent with a narrow potential window can be preferably used as explained below because the lithium-manganese composite oxide is used as the positive electrode active material and the lithium-titanium composite oxide is used as the negative electrode positive material. In a common, conventional lithium-ion battery using a negative electrode active material consisting of a carbon material, it was difficult to use the organic solvent with a narrow potential window.

An organic solvent used in the nonaqueous electrolytic solution has a potential window. The potential window is a measure of oxidation resistance and reduction resistance, and it can be said that the wider the potential window is, the more stable the organic solvent is.

In a common, conventional lithium-ion secondary battery using lithium cobaltate as the positive electrode active material and a carbon material as the negative electrode active material, oxidation resistance until near 4.25 V (the charge-discharge potential of cobalt) and reduction resistance until near 0 V (the charge-discharge potential of graphite) are required. Here and below, the potential is based on lithium metal. Consequently, in a common, conventional lithium-ion secondary battery, it was difficult to use an organic solvent in which its potential window does not include near 4.25 V and near 0 V.

Examples of the organic solvents that do not include near 4.25 V and near 0 V in their potential windows include organic solvents of lactones and propylene carbonate. These solvents are useful because they are inexpensive, have good ability to dissolve electrolytes because of their large dielectric constants, and also have excellent oxidation resistance. Further, trimethylphosphate (TMP) and triethylphosphate (TEP) are organic solvents that are very safe because of their fire-extinguishing effects, but were difficult to use because of their low reduction resistance. Such organic solvents were difficult to use in the lithium-ion secondary batteries using graphite as the negative electrode active material because they have low reduction resistance and are decomposed during charge and discharge of the graphite.

For example, in a nonaqueous electrolyte secondary battery using Li₄Ti₅O₁₂ (Li[Li_{1/3}Ti_{5/3}]O₄) as the negative electrode, the negative electrode potential is 1.55 V. Consequently, the level of reduction resistance required for the organic solvent is much more alleviated. As a result, the decomposition of propylene carbonate or other solvent on the negative electrode surface which was caused during charge and discharge of the lithium-ion secondary battery using graphite does not occur. In this way, the organic solvent with a narrow potential window as described above can be used in the nonaqueous electrolyte secondary battery of the present invention because the lithium-titanium composite oxide is used as the negative electrode active material.

When the composite oxide containing lithium and manganese as constituent elements is used for the positive electrode, moreover, the potential of the positive electrode rises to about 4.55 V or more, but this is not a problem in using the organic solvents described above because the oxidation resistance of each of the organic solvents described above is 5 V or more. It is thought that the highly oxidation-resistant solvents such as sulfolane (SL), methyl diglyme, acetonitrile (AN), propionitrile (PN), butyronitrile (BN), 1,1,2,2-tetrafluoroethyl-2,2,3,3-tetrafluoropropyl ether (TFETFPE), 2,2,3,3-tetrafluoropropyldifluoromethyl ether (TFPDFME), methyl difluoroacetate (MDFA), ethyl difluoroacetate (EDFA), fluorinated ethylene carbonate are also appropriate. The conventionally used solvents such as dimethyl carbonate (DMC), methylethyl carbonate (MEC) and diethyl carbonate (DEC) can also be used to dilute highly viscous solvents.

EC is a desirable organic solvent because of its large dielectric constant and high liquid stability. Fluorinated EC obtained by fluorinating the hydrogen of EC is desirable for its high oxidation resistance. Compared to EC, fluorinated EC is considered useful because it can suppress generation of CO₂ gas, which is thought to be caused by decomposition of EC on the positive electrode surface during battery storage at a high temperature. However, in a lithium-ion secondary battery using a carbon material for the negative electrode active material, fluorinated EC is difficult to use because it undergoes reductive degradation. In the secondary battery of the present embodiment, fluorinated EC can be used because the lithium-titanium composite oxide is used for the negative electrode active material.

As explained above, in the nonaqueous electrolyte secondary battery using the lithium-titanium composite oxide as the negative electrode active material, the organic solvents can be selected from a much wider range than in a conventional nonaqueous electrolyte secondary battery.

As a solute for use in the nonaqueous electrolytic solution, Lithium salts of inorganic anions and lithium salts of organic anions and the like that are conventionally used as electrolytes in lithium-ion secondary batteries can be used, without any particular limitations. Specific examples include LiClO₄, LiBF₄, LiPF₆, LiAlCl₄, LiSbF₆, LiSCN, LiCF₃SO₃, LiCF₃CO₂, LiCF₃SO₂, LiAsF₆, LiB₁₀Cl₁₀, lower aliphatic lithium carboxylate, chloroborane lithium, lithium tetraphenylborate, LiN(CF₃SO₂)(C₂F₅SO₂), LiN(CF₃SO₂)₂, LiN(C₂F₅SO₂)₂, LiN(CF₃SO₂)(C₄F₉SO₂) and other imides. Each of these can be used alone, or two or more can be used in combination. Of these, the solute containing LiPF₆ can be used by preference.

The dissolved amount of the lithium salt in the nonaqueous solvent is not particular limited, but is preferably 0.2 to 2 mol/liter.

The added amount of the nonaqueous electrolytic solution is not particularly limited, and can be adjusted appropriately according to the size of the battery and the amounts of the positive electrode active material and negative electrode active material.

A solid electrolyte can also be used in the nonaqueous electrolyte secondary battery. In the nonaqueous electrolyte secondary battery of the present embodiment, there is little volume expansion of the positive and negative electrodes. Consequently, it is possible to control the problem caused in using solid electrolytes that peeling at the boundary between the electrode plate and the solid electrolyte occurs due to expansion and shrinkage of the electrode plate.

The solid electrolytes are classified as inorganic solid electrolytes or organic solid electrolytes.

Examples of the inorganic solid electrolytes include Li nitrides, halides, oxo-acid salts and the like. In particular, 80Li₂S-20P₂O₅, the amorphous Li₃PO₄-63Li₂S-36SiS₂, 44LiI-38Li₂S-18P₂S₅ and other sulfides, Li_{2.9}PO_{3.3}N_{0.46} oxide and Lh_{3.25}Ge_{0.25}P_{0.75}S₄ sulfide as an amorphous substance, and La_{0.56}Li_{0.33}TiO₃ and Li_{1.4}Al_{0.3}Ti_{1.6}(PO₄)₃ oxides and the like can be used by preference. It is also desirable to use a method in which a mixed sintered material of LiF and LiBO₂ is used to achieve sintering of each material while simultaneously forming a solid electrolyte layer at a bonded interface, or the like.

Specific examples of the organic solid electrolytes include polymer materials such as polyethylene oxide, polypropylene oxide, polyphosphazene, polyaziridine, polyethylene sulfide, polyvinyl alcohol, polyvinylidene fluoride, polyhexafluoropropylene and derivatives, mixtures and composites of these. These may be used alone, or two or more may be used in combination. Of these, a copolymer of vinylidene fluoride and hexafluoropropylene or a mixture of vinylidene polyfluoride and polyethylene oxide can be used by preference. A gel electrolyte containing the organic solid electrolyte and a nonaqeuous electrolytic solution can also be used by preference.

Next, the configuration of the nonaqueous electrolyte secondary battery is explained.

Fig. 1 shows a partial cross-sectional view of a cylindrical battery corresponding to one embodiment of the nonaqueous electrolyte secondary battery. In the cylindrical battery shown in Fig. 1, battery case 1 contains electrode plate assembly 4, which is obtained by winding the positive and negative electrodes multiple times in a spiral form with a separator between them. Positive electrode lead 5 led from the positive electrode is connected to seal plate 2, while negative electrode lead 6 led from the negative electrode is connected to the bottom of battery case 1. An electron conducting metal or alloy that is resistant to organic electrolytic solutions is used for the battery case and the lead plates. Specifically, iron, nickel, titanium, chromium, molybdenum, copper, aluminum and other metals or alloys of these metals can be used. A stainless steel plate or Al-Mn alloy plate is preferably worked for the battery case, and aluminum is desirable for the positive electrode lead. Nickel or aluminum is preferred as the material of the negative electrode lead. For the battery case, various engineering plastics and combinations of metals with various engineering plastics can also be used to reduce its weight.

Electrode plate assembly 4 is provided with insulating rings 7 each at the top and bottom. The electrolytic solution is injected, and the battery case is sealed with gasket 3 using the seal plate. The seal plate can also be provided with a safety valve.

Various conventionally known safety elements can also be used, such as fuses, bimetals, PTC elements and the like for preventing overcurrent. In addition to a safety valve, measures that can be used to prevent increased pressure inside the battery case include making a notch in the case, cracking the gasket, cracking the seal plate and disconnecting the lead plate. A protective circuit that incorporates means against overcharge and overdischarge can be provided as part of the battery charger, or can be connected independently. For welding the caps, battery case, sheets and leads, a known method (such as AC or DC electrical welding, laser welding or ultrasound welding) can be used. As the seal material, a conventionally known compound or mixture such as asphalt or the like can be used.

The battery may be in any shape such as a coin, button, sheet, cylinder, flat shape, angular shape or the like. If the battery shape is a coin-type or a button-type, the positive electrode mixture and negative electrode mixture are generally compressed into pellet shape for purposes of use. The thickness and diameter of the pellets can be determined by the size of the battery. A shape of the wound electrode assembly in the present invention is not necessarily a true cylinder, and may be a flattened cylinder with an oval cross-section or a prismatic shape with an oblong cross-section.

Hereinafter, the present invention is explained in more detail by means of examples. However, the present invention is not in any way limited by these examples.

### EXAMPLES

First, the manufacture of Sample Batteries 1A through 9T used in the present embodiment and Comparative Batteries 1U through 11Z is explained.

### <Sample Battery 1A>

### (Preparation of positive electrode plate)

3 kg of Li_{1.1}Al_{0.1}Mn_{1.8}O₄, 1.5 kg of PVDF solution (solids 12 mass% in N-methylpyrrolidone (NMP) solution, Kureha Corp. #1320), 120 g of acetylene black and a suitable amount of NMP were agitated with a dual-arm kneader to prepare a positive electrode mixture layer paste. The resulting positive electrode mixture layer paste was coated on both sides of a current collector consisting of 20 µm-thick aluminum foil, dried, and rolled to a total thickness of 160 µm to form a laminate of a current collector with positive electrode mixture layers. The resulting laminate was cut to a width suited to insertion into a cylindrical 18650 battery case to obtain the positive electrode plate.

### (Preparation of negative electrode plate)

3 kg of Li₄Ti₅O₁₂, 1.5 kg of the aforementioned PVDF solution, 120 g of acetylene black and a suitable amount of NMP were agitated with a dual-arm kneader to prepare a negative electrode mixture layer paste. The resulting negative electrode mixture layer paste was coated on both sides of a current collector consisting of 20 µm-thick aluminum foil, dried, and rolled to a total thickness of 140 µm to form a laminate of a current collector with negative electrode mixture layers. The resulting laminate was cut to a width suited to insertion into a cylindrical 18650 battery case to obtain the negative electrode plate.

### (Preparation of aluminum particle-containing porous aramide thin film)

200 g of aramide resin fiber (3 mm cut fiber, deflection temperature under load 320°C or more, Toray Dupont KEVLAR) was dissolved at 80°C in 800 g of N-methylpyrrolidone to obtain a resin solution. 10 g of lithium chloride powder (Kanto Chemical) was dissolved with agitation in the resulting resin solution, and 0.2 g (0.1 mass% of the resin component) of alumina powder (median diameter 0.3 µm) was added with thorough agitation to obtain an alumina particle dispersion. This alumina particle dispersion was applied with a bar coater having a 200 µm thick gap to a glass substrate heated to 60°C, and dried for 3 hours in a 110°C drying oven to obtain a white thin film. This thin film was immersed for 2.5 hours in a warm water bath of distilled water at 60°C to dissolve the lithium chloride in the thin film. This thin film was then washed with pure water to obtain an alumina particle-containing porous aramide thin film. The thickness of the resulting alumina particle-containing porous aramide thin film was 30 µm.

### (Assembly of nonaqueous electrolyte secondary battery)

Leads were ultrasound welded to both the positive electrode plate and negative electrode plate. The positive electrode plate and negative electrode plate were laminated with the inorganic particle-containing porous aramide thin film (separator) in between, wound, and cut to a specific length to obtain an electrode assembly. This electrode assembly was then placed in a cylindrical 18650 battery case, and 5 g of a nonaqueous electrolytic solution containing 1.5 M LiPF₆ dissolved in an EC/MEC mixed solvent (volume ratio 1:3) was added. The battery case was then sealed to obtain a cylindrical 18650 lithium-ion secondary battery. This was called Sample Battery 1A.

### <Sample battery 2A>

970 g of alumina powder (median diameter 0.3 µm), 375 g of Zeon Corporation's polyacrylonitrile rubber binder BM-720H (solids 8 weight%) and a suitable amount of NMP were agitated with a dual-arm kneader to prepare a porous thin film layer paste. The porous thin film layer paste was coated to a thickness of 30 µm on both sides of a positive electrode plate similar to that used in Sample Battery 1A, and dried to adhesively laminate porous thin film layers on the surfaces of the positive electrode plate. The porous thin film layer functions as a separator.

Leads were then welded to the positive plate with the porous thin film layers formed thereon and a negative plate similar to that used in Sample Battery 1A. The positive and negative plates were then laminated together, wound, and cut to a prescribed length to obtain an electrode assembly. A secondary battery was then obtained by the same methods used to prepare Sample Battery 1A using the resulting electrode assembly. This was called Sample Battery 2A.

### <Sample Battery 3A>

A secondary battery was obtained by the same methods used to prepare Sample Battery 2A except that porous thin film layers were formed on the surface of the negative electrode plate rather than on the positive electrode plate. This was called Sample Battery 3A.

### <Sample Battery 4A>

A 5 µm-thick alumina particle-containing porous aramide thin film was prepared as in Sample Battery 1A except that the thickness of the alumina particle-containing porous aramide thin film was different.

25 µm-thick polyethylene-polypropylene composite film with a shut-down function (Celgard 2300, shut-down temperature 120°C, hereunder called PE/PP thin film) was laid as a shut-down layer over one side of the resulting alumina particle-containing porous aramide thin film, and press bonded with a hot roll press heated to 90°C to prepare a 30 µm-thick separator consisting of a shut-down layer laminated with an alumina particle-containing porous aramide thin film.

A secondary battery was obtained by the same methods used to prepare Sample Battery 1A except that this separator was used instead of the separator used in Sample Battery 1A. This was called Sample Battery 4A.

### <Sample batteries 5A and 6A>

Secondary batteries were prepared by the same methods used to prepare Sample Batteries 2A and 3A, respectively, except that the positive and negative plates were wound with PE/PP thin film between the plates in the battery assembly process. These were called Sample Batteries 5A and 6A, respectively.

### <Sample Batteries 7A and 8A>

Secondary batteries were obtained by the same methods used to prepare Sample Batteries 5A and 6A, respectively, except that 30 µm-thick nonwoven fabric consisting of polypropylene fiber (average pore size 0.3 µm, fiber diameter 2 µm, hereunder optionally called "PP nonwoven") was used instead of the PE/PP thin film. These were called Sample Batteries 7A and 8A, respectively.

### <Sample Battery 9A>

A secondary battery was obtained by the same methods used to prepare Sample Battery 1A except that the alumina particle-containing polypropylene nonwoven fabric described below was used in place of the alumina particle-containing porous aramide thin film. This was called Sample Battery 9A. The alumina particle-containing polypropylene nowoven fabric was prepared as follows.

The porous thin film layer paste used in manufacturing Sample Battery 2A was applied to 5 µm on both sides of 25 µm-thick nonwoven fabric consisting of polypropylene fibers (average pore size 0.7 µm, fiber diameter 2 µm) to impregnate the cloth, and then dried to obtain alumina particle-containing polypropylene nonwoven fabric. The alumina content of the resulting alumina particle-containing polypropylene nonwoven fabric as determined by ICP emission spectrometry was 0.5 mass%.

### < Sample Battery 10A>

A secondary battery was obtained by the same methods used to prepare Sample Battery 1A except that 0.1 g (0.05 mass%) of alumina powder was added instead of 0.2 g (0.1 mass%) of alumina powder to prepare the alumina particle-containing porous aramide thin film. This was called Sample Battery 10A.

### < Sample Batteries 1B through 9B>

Sample Batteries 1B through 9B were obtained by the same methods used to prepare Sample Batteries 1A through 9A, respectively, except that LiNi_{1/2}Mn_{1/2}O₂ was used as the positive electrode active material.

### < Sample Batteries 1C through 9C>

Sample Batteries 1C through 9C were obtained by the same methods used to prepare Sample Batteries 1A through 9A, respectively, except that LiNi_{1/3}Mn_{1/3}Co_{1/3}O₂ was used as the positive electrode active material.

### < Sample Batteries 1D through 9D>

Sample Batteries 1D through 9D were obtained by the same methods used to prepare Sample Batteries 1A through 9A, respectively, except that Li_{1.1}Mn₂O₄ was used as the positive electrode active material.

### < Sample Batteries 1E through 9E>

Sample Batteries 1E through 9E were obtained by the same methods used to prepare Sample Batteries 1A through 9A, respectively, except that LiNi_{2/3}Mn_{4/3}O₄ was used as the positive electrode active material.

### < Sample Batteries 1F through 9F>

Sample Batteries 1F through 9F were obtained by the same methods used to prepare Sample Batteries 1A through 9A, respectively, except that a nonaqueous electrolytic solution containing 1.5 M LiPF₆ dissolved in a PC/MEC mixed solvent (volume ratio 1:1) was used in place of the nonaqueous electrolytic solution containing 1.5 M LiPF₆ dissolved in an EC/MEC mixed solvent.

### < Sample Batteries 1G through 9G>

Sample Batteries 1G through 9G were obtained by the same methods used to prepare Sample Batteries 1A through 9A, respectively, except that a nonaqueous electrolytic solution containing 1.5 M LiPF₆ dissolved in TMP solvent was used in place of the nonaqueous electrolytic solution containing 1.5 M LiPF₆ dissolved in an EC/MEC mixed solvent.

### < Sample Batteries 1H through 9H>

Sample Batteries 1H through 9H were obtained by the same methods used to prepare Sample Batteries 1A through 9A, respectively, except that a nonaqueous electrolytic solution containing 1.5 M LiPF₆ dissolved in SL was used in place of the nonaqueous electrolytic solution containing 1.5 M LiPF₆ dissolved in an EC/MEC mixed solvent.

### < Sample Batteries 1I through 91>

Sample Batteries 1I through 91 were obtained by the same methods used to prepare Sample Batteries 1A through 9A, respectively, except that a nonaqueous electrolytic solution containing 1.5 M LiPF₆ dissolved in AN was used in place of the nonaqueous electrolytic solution containing 1.5 M LiPF₆ dissolved in an EC/MEC mixed solvent.

### < Sample Batteries 1J through 9J>

Sample Batteries 1J through 9J were obtained by the same methods used to prepare Sample Batteries 1A through 9A, respectively, except that a nonaqueous electrolytic solution containing 1.5 M LiPF₆ dissolved in PN was used in place of the nonaqueous electrolytic solution containing 1.5 M LiPF₆ dissolved in an EC/MEC mixed solvent.

### < Sample Batteries 1K through 9K>

Sample Batteries 1K through 9K were obtained by the same methods used to prepare Sample Batteries 1A through 9A, respectively, except that a nonaqueous electrolytic solution containing 1.5 M LiPF₆ dissolved in BN was used in place of the nonaqueous electrolytic solution containing 1.5 M LiPF₆ dissolved in an EC/MEC mixed solvent.

### < Sample Batteries 1L through 9L>

Sample Batteries 1L through 9L were obtained by the same methods used to prepare Sample Batteries 1A through 9A, respectively, except that a nonaqueous electrolytic solution containing 1.5 M LiPF₆ dissolved in TFETFPE was used in place of the nonaqueous electrolytic solution containing 1.5 M LiPF₆ dissolved in an EC/MEC mixed solvent.

### < Sample Batteries 1M through 9M>

Sample Batteries 1M through 9M were obtained by the same methods used to prepare Sample Batteries 1A through 9A, respectively, except that a nonaqueous electrolytic solution containing 1.5 M LiPF₆ dissolved in TFPDFME was used in place of the nonaqueous electrolytic solution containing 1.5 M LiPF₆ dissolved in an EC/MEC mixed solvent.

### < Sample Batteries 1N through 9N>

Sample Batteries 1N through 9N were obtained by the same methods used to prepare Sample Batteries 1A through 9A, respectively, except that a nonaqueous electrolytic solution containing 1.5 M LiPF₆ dissolved in MDFA was used in place of the nonaqueous electrolytic solution containing 1.5 M LiPF₆ dissolved in an EC/MEC mixed solvent.

### < Sample Batteries 10 through 90>

Sample Batteries 1O through 90 were obtained by the same methods used to prepare Sample Batteries 1A through 9A, respectively, except that a nonaqueous electrolytic solution containing 1.5 M LiPF₆ dissolved in EDFA was used in place of the nonaqueous electrolytic solution containing 1.5 M LiPF₆ dissolved in an EC/MEC mixed solvent.

### < Sample Batteries 1P through 9P>

Sample Batteries 1P through 9P were obtained by the same methods used to prepare Sample Batteries 1A through 9A, respectively, except that a nonaqueous electrolytic solution containing 1.5 M LiPF₆ dissolved in ETFEC (ethyl 2,2,2-trifluoroethyl carbonate) was used in place of the nonaqueous electrolytic solution containing 1.5 M LiPF₆ dissolved in an EC/MEC mixed solvent.

### < Sample Batteries 1Q through 9Q>

Sample Batteries 1Q through 9Q were obtained by the same methods used to prepare Sample Batteries 1A through 9A, respectively, except that a nonaqueous electrolytic solution containing 1.5 M LiPF₆ dissolved in DTFEC (di-(2,2,2-trifluoroethyl)carbonate) was used in place of the nonaqueous electrolytic solution containing 1.5 M LiPF₆ dissolved in an EC/MEC mixed solvent.

### < Sample Batteries 1R through 9R>

Sample Batteries 1R through 9R were obtained by the same methods used to prepare Sample Batteries 1A through 9A, respectively, except that magnesia powder (median diameter 0.3 µm) was used in place of the alumina powder (median diameter 0.3 µm).

### < Sample Batteries 1S through 9S>

Sample Batteries 1S through 9S were obtained by the same methods used to prepare Sample Batteries 1A through 9A, respectively, except that glass fiber (ZP150 from Asahi Fiber Glass) was used in place of the alumina powder (median diameter 0.3 µm).

### < Sample Batteries 1T through 9T>

Sample Batteries 1T through 9T were obtained by the same methods used to prepare Sample Batteries 1A through 9A, respectively, except that mica whiskers (median diameter 0.3 µm) were used in place of the alumina powder (median diameter 0.3 µm).

### <Comparative Batteries 1U and 1V>

Comparative Batteries 1U and 1V were obtained by the same methods used to prepare Sample Batteries 1A and 1E, respectively, except that no alumina was added when preparing the alumina particle-containing porous aramide thin film.

### <Comparative Batteries 1W and 1X>

Comparative Batteries 1 Wand 1X were obtained by the same methods used to obtain Sample Batteries 1A and 1E, respectively, except that a 25 µm polyethylene-polypropylene composite film (Celgard 2300) was used in place of the alumina particle-containing porous aramide thin film.

### <Comparative Batteries 1Y through 9Y>

Comparative Batteries 1Y through 9Y were obtained by the same methods used to prepare Samples Batteries 1A through 9A, respectively, except that artificial graphite powder was used in place of Li₄Ti₅O₁₂ as the negative electrode active material.

### <Comparative Battery 10Y>

Comparative Battery 10Y was obtained by the same methods used to prepare Sample Battery 1A except that artificial graphite powder was used in place of Li₄Ti₅O₁₂ as the negative electrode active material, and no alumina was added when preparing the alumina particle-containing porous aramide thin film.

### <Comparative Battery 11Y>

Comparative Battery 11Y was obtained by the same methods used to prepare Sample Battery 1A except that a 25 µm polyethylene-polypropylene composite film (Celgard 2300) was used in place of the alumina particle-containing porous aramide thin film.

### <Comparative Batteries 1Z through 9Z>

Comparative Batteries 1Z through 9Z were obtained by the same methods used to prepare Sample Batteries 1A through 9A, respectively, except that LiCoO₂ (lithium cobaltate) was used in place of Li_{1.1}Al_{0.1}Mn_{1.8}O₄ as the positive electrode active material.

### <Comparative Battery 10Z>

Comparative Battery 10Z was obtained by the same methods used to prepare Comparative Battery 1Z except that no alumina was added when preparing the alumina particle-containing porous aramide thin film.

### <Comparative Battery 11Z>

Comparative Battery 11Z was prepared by the same methods used to prepare Comparative Battery 1Z except that a 25 µm polyethylene-polypropylene composite film (Celgard 2300) was used in place of the alumina particle-containing porous aramide thin film.

### [Evaluation]

With respect to the resulting Sample Batteries and Comparative Batteries, the output characteristics and charge transfer resistance at -18°C were evaluated as follows. The results are shown in Tables 1 through 5.

### (Output Characteristics)

Break-in charge and discharge was performed twice according to the following break-in charge-discharge pattern for the Sample Batteries and Comparative Batteries, which were then stored for 2 days at 40°C. They were then charged to a battery voltage of 2.9 V (or 3.6 V or 4.2 V) at a constant current of 1400 mA in a 25°C environment, and then charged at constant voltage until the electrical charge was 30 mA at that voltage. The voltage at 30 seconds during 30-second discharge was then measured at a constant current of 16 A at a -18°C environment. The end voltage was selected so as to correspond to 14.4 to 10.2 V (the operating range of a lead battery) in the case of a serial battery assembly (4 or 5 batteries). However, because this would be outside the operating voltage range for Comparative Batteries 1W through 11W, these were charged and discharged in the range of 4.2 V to 3.0 V, which is the normal operating range of a lithium ion secondary battery.

### Break-in charge-discharge pattern

Charge: first charged to a battery voltage of 2.9 V, 3.6 V or 4.2 V under constant current of 400 mA in a 25°C environment, then charged with constant voltage to an electrical charge of 50 mA at the same voltage.

Discharge: discharged to a battery voltage of 2 V at a constant current of 400 mA in a 25°C environment.

### (Measurement of charge transfer resistance)

Using the Sample Batteries and Comparative Batteries after evaluation of battery charge-discharge characteristics, resistance was measured by an AC impedance method under state of charge (SOC) of 2.9 V, 3.6 V or 4.2 V at a -18°C environment.

For the AC impedance method, a frequency response analyzer, Solartron 1260 and a potentiostat/galvanostat, Solartron 1287 (both by Toyo Corp., frequency 10 KHz to 0.01 Hz) were used. Because the time constants of the positive and negative plates are similar, it was not possible to distinguish whether a reduction in charge transfer resistance was attributable to the positive plate or the negative plate.

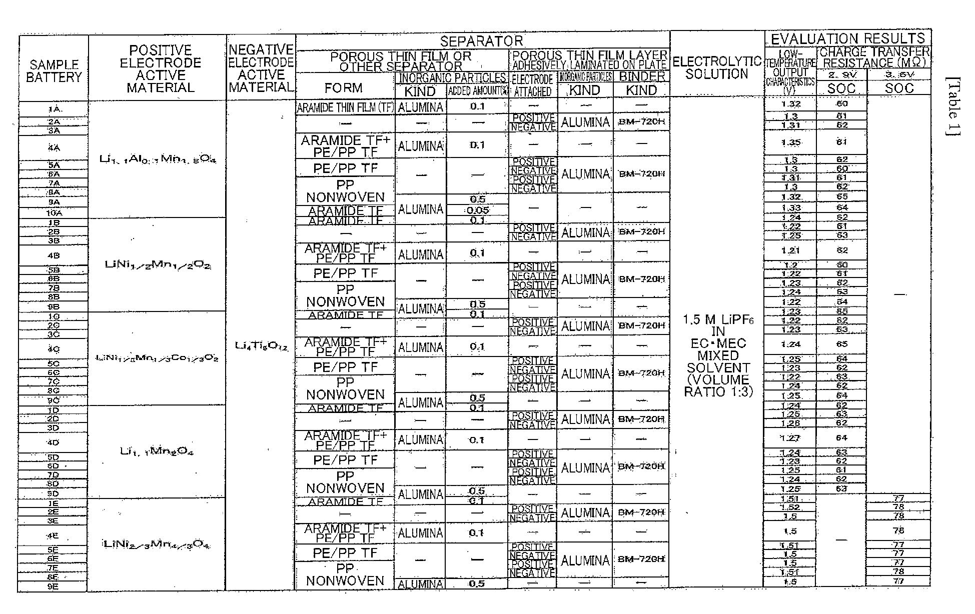

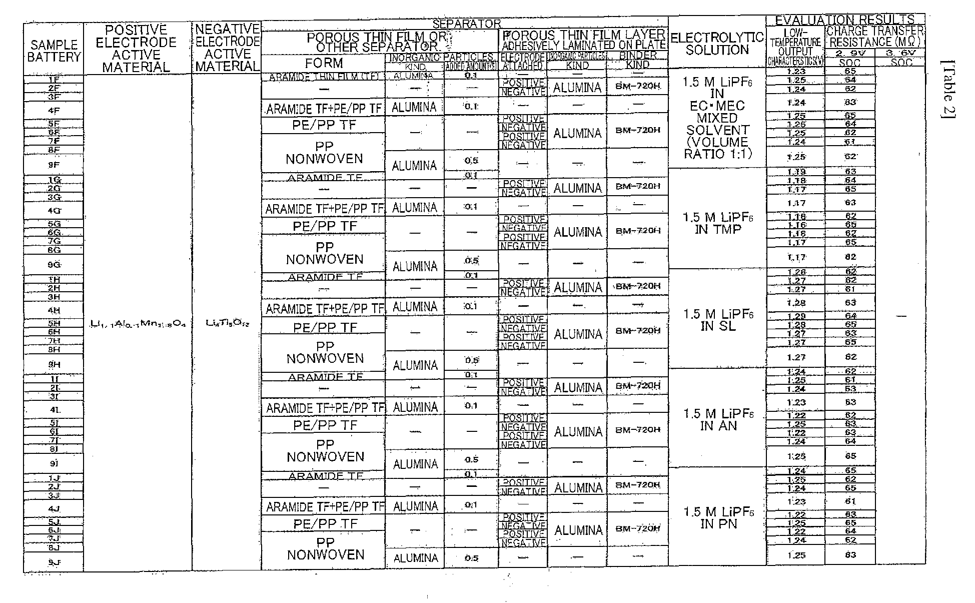

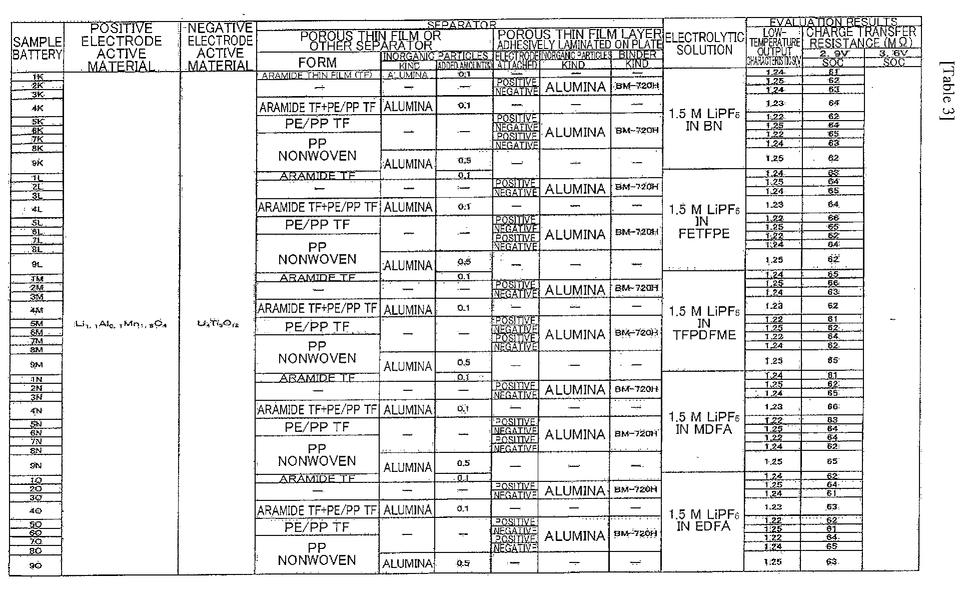

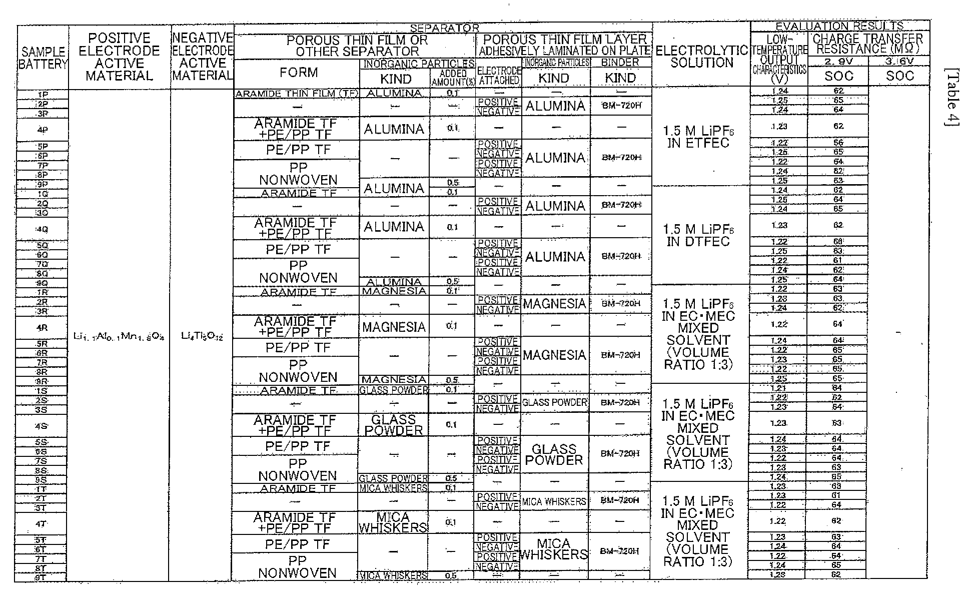

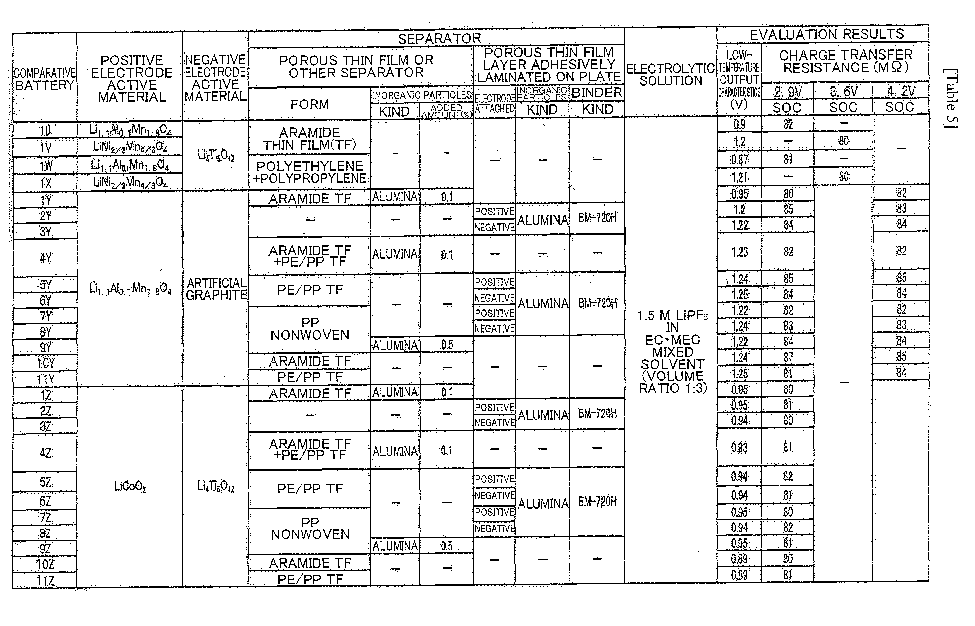

As found from Tables 1 through 5, Sample Batteries 1A through 9A, 1B through 9B, 1C through 9C, 1D through 9D, 1E through 9E, 1F through 9F, 1G through 9G, 1H through 9H, 1I through 9I, 1J through 9J, 1K through 9K, 1L through 9L, 1M through 9M, 1N through 9N, 1O through 90, 1P through 9P, 1Q through 9Q, 1R through 9R, 1S through 9S and 1T through 9T showed a tendency to decrease the values of charge transfer resistance and increase the maintenance voltage during high-rate discharge in a low-temperature environment, compared to Comparative Batteries 1U, 1V, 1W, 1X, 1Y through 11Y and 1Z through 11Z lacking in the aforementioned configuration.

In the case of Sample Battery 10A in which the added amount of inorganic particles (alumina) was 0.05 mass% being lower than 0.1 mass%, the charge transfer resistance was only slightly lower than that of Comparative Battery 1U, and the maintenance voltage during high-rate discharge was about the same as that of Comparative Battery 1U.

One aspect of the present invention is a nonaqueous electrolyte secondary battery provided with a nonaqueous electrolyte and an electrode assembly comprising a positive electrode having a positive electrode active material, a negative electrode having a negative electrode active material and a separator interposed between the positive and negative electrodes, wherein the positive electrode active material contains a lithium-manganese composite oxide containing lithium and manganese as constituent elements, the negative electrode active material contains a lithium-titanium composite oxide containing lithium and titanium as constituent elements, and the separator contains inorganic particles.

The immediate reason why the output characteristics in low-temperature environments are improved by means of this configuration is unknown at present. As a result of various investigations, however, a phenomenon has been found that suggests that it is influenced by the size of the charge transfer resistance in the state of charge in the positive or negative electrode, as explained below.

In a lithium-ion secondary battery using a lithium-manganese composite oxide as the positive electrode active material, manganese ions are eluted into the nonaqueous electrolyte from the positive electrode active material during charge and discharge. Under these circumstances, when a lithium-titanium composite oxide is used as the negative electrode active material, the manganese remains as manganese ions in the nonaqueous electrolyte rather than being deposited on the negative electrode surface. This happens because the deposition potential of the manganese is lower than the oxidation-reduction potential of the lithium-titanium composite oxide. The present inventors discovered that when manganese ions are present in the nonaqueous electrolyte of the battery, the charge transfer resistance of the electrodes in a charged state is specifically reduced and the output characteristics at low temperatures are improved when the separator contains inorganic particles. When a carbon material is used as the negative electrode active material, on the other hand, the manganese is deposited on the negative electrode surface, and very few manganese ions remain in the nonaqueous electrolyte. This happens because the deposition potential of the manganese is higher than the oxidation-reduction potential of the carbon material. In this case, even if the separator contains inorganic particles, the charge transfer resistance of the electrode in a 4.2 V state of charge was not altered, and the output characteristics in low temperature environments were only slightly improved.

In a nonaqueous electrolyte secondary battery using lithium cobaltate as the positive electrode active material and a lithium-titanium composite oxide as the negative electrode active material, including inorganic particles in the separator made no difference in the charge transfer resistance of the electrode in a 2.9 V state of charge, and only slightly improved the output characteristics in low-temperature environments. This is attributed to the absence of manganese ions in the electrolyte.

It can be inferred from the above phenomena that in a nonaqueous electrolyte secondary battery using a lithium-manganese composite oxide as the positive electrode active material and a lithium-titanium composite oxide as the negative electrode active material, the mechanism by which the output characteristics in low-temperature environments are improved when the separator contains inorganic particles is considered as follows. Some of the manganese ions eluted in the electrolyte are adsorbed by inorganic particles on the surface of the separator, and the characteristics of the electrode surface are altered by the presence of these inorganic particles in the vicinity of the electrodes, leading to an increase in the transfer speed of the lithium ions near the electrodes in low-temperature environments.

The separator is preferably a porous thin film layer containing the inorganic particles that is formed on the surface of the positive electrode and/or the negative electrode, and specifically, the porous thin film layer is preferably a thin film layer that is formed by binding the inorganic particles together with a binder, from the standpoint of improving shape stability of the separator.

It is desirable that the organic particles be organic oxide particles, and specifically alumina and/or magnesia particles in terms of ability to adsorb manganese ions.

From the standpoint of reducing the weight and cost of the battery, it is desirable that the positive electrode comprises a positive electrode current collector and a positive electrode mixture layer containing the positive electrode active material formed on the surface of the positive electrode current collector, that the negative electrode comprises a negative electrode current collector and a negative electrode mixture layer containing the negative electrode active material formed on the surface of the negative electrode current collector, and that the positive electrode current collector and the negative electrode current collector are made of an aluminum-based metal.

It is desirable from the standpoint of cost, ability to dissolve the electrolyte, safety and the like that the nonaqueous electrolyte contains an electrolyte dissolved in a nonaqueous solvent, and that the nonaqueous solvent contains at least one selected from the group consisting of propylene carbonate, trimethylphosphate, sulfolane, acetonitrile, propionitrile, butyronitrile, fluorinated ether, fluorinated carboxylic acid ester, and fluorinated ethylene carbonate.

## Claims

1. A nonaqueous electrolyte secondary battery provided with a nonaqueous electrolyte and an electrode assembly comprising a positive electrode having a positive electrode active material, a negative electrode having a negative electrode active material and a separator interposed between the positive and negative electrodes, wherein
the positive electrode active material contains a lithium-manganese composite oxide containing lithium and manganese as constituent elements, the negative electrode active material contains a lithium-titanium composite oxide containing lithium and titanium as constituent elements, and the separator contains inorganic particles.

2. The nonaqueous electrolyte secondary battery according to Claim 1, wherein the separator is a porous thin film layer containing the inorganic particles, and the porous thin film layer is formed on a surface of the positive electrode and/or the negative electrode.

3. The nonaqueous electrolyte secondary battery according to Claim 2, wherein the porous thin film layer containing the inorganic particles is a thin film layer formed by binding the inorganic particles with a binder.

4. The nonaqueous electrolyte secondary battery according to any one of Claims 1 through 3, wherein the inorganic particles are inorganic oxide particles.

5. The nonaqueous electrolyte secondary battery according to any one of Claims 1 through 3, wherein the inorganic particles are of alumina and/or magnesia.

6. The nonaqueous electrolyte secondary battery according to any one of Claims 1 through 5, wherein
the positive electrode comprises a positive electrode current collector and a positive electrode mixture layer containing the positive electrode active material formed on the surface of the positive electrode current collector,
the negative electrode comprises a negative electrode current collector and a negative electrode mixture layer containing the negative electrode active material formed on the surface of the negative electrode current collector, and
the positive electrode current collector and the negative electrode current collector are made of an aluminum-based metal.

7. The nonaqueous electrolyte secondary battery according to any one of Claims 1 through 6, wherein
the nonaqueous electrolyte contains an electrolyte dissolved in a nonaqueous solvent, and
the nonaqueous solvent contains at least one selected from the group consisting of propylene carbonate, trimethylphosphate, sulfolane, acetonitrile, propionitrile, butyronitrile, fluorinated ether, fluorinated carboxylic acid ester, and fluorinated ethylene carbonate.
